# EUROPEAN PATENT APPLICATION

(11) **EP 4 694 140 A1**
(43) Date of publication of application: **11.02.2026**
(21) Application number: 24306341.9
(22) Date of filing: 08.08.2024
(51) Int. Cl.: H04N 21/218, H04N 21/234, H04N 21/236, H04N 21/44, H04N 21/81, H04N 21/854, H04N 21/8543, G06T 13/40, G06T 7/55

(54) **AVATAR JSON INTERCHANGE FILE FORMAT FOR CAPTURE PARAMETERS ENCODING**

(71) Applicant: InterDigital CE Patent Holdings, SAS, 75017 Paris (FR)
(72) Inventor: COVA REGATEIRO, João Pedro, 35220 CHATEAUBOURG (FR); GOSSELIN, Philippe Henri, 35235 THORIGNE-FOUILLARD (FR); GALVANE, Quentin, 35235 THORIGNE-FOUILLARD (FR)
(74) Representative: Vossius & Partner Patentanwälte Rechtsanwälte mbB

(57) **Abstract**

Some embodiments of a method may include: obtaining a plurality of images of a portion of a person; performing one or more mesh photogrametry processes on at least one of the plurality of images; transcoding an output of at least one of the one or more mesh photogrametry processes, wherein transcoding the output of at least one of the one or more mesh photogrametry processes generates a transcoder output; and performing a rendering process on the transcoder output to generate avatar data, wherein the avatar data comprises capture data corresponding to at least one of the mesh photogrametry processes.

## Description

### INCORPORATION BY REFERENCE

The present application incorporates by reference in their entirety the following applications: European Patent Application Serial No. EP24305094, entitled "AVATAR JSON INTERCHANGE FILE FORMAT" and filed January 15, 2024 (‴094 application"); and European Patent Application Serial No. EP23306745, entitled "AVATAR MEDIA REPRESENTATION FOR TRANSMISSION" and filed October 10, 2023 (`745 application).

### BACKGROUND

The present application is related to encoding of 3D content data.

### SUMMARY

An example method in accordance with some embodiments may include: obtaining a plurality of images of a portion of a person; performing one or more mesh photogrametry processes on at least one of the plurality of images; transcoding an output of at least one of the one or more mesh photogrametry processes, wherein transcoding the output of at least one of the one or more mesh photogrametry processes generates a transcoder output; and performing a rendering process on the transcoder output to generate avatar data, wherein the avatar data includes capture data corresponding to at least one of the mesh photogrametry processes.

For some embodiments of the example method, the one or more mesh processes includes at least one of the following processes: a structure from motion (SFM) process, a camera calibration process, a point cloud data generation process, a bounding volume process, and a coordinate transformation process.

Some embodiments of the example method may further include encoding the avatar data to generate Avatar JSON Interchange File (AJIF) format output data.

Some embodiments of the example method may further include encoding the avatar data to generate Graphics Library Transmission Format (gITF) output data.

For some embodiments of the example method, encoding the avatar data includes: compressing the avatar data to generate compressed avatar data; and encoding the compressed avatar data.

Some embodiments of the example method may further include sending the encoded avatar data to a server.

For some embodiments of the example method, the plurality of images include two or more images of the portion of the person.

For some embodiments of the example method, the plurality of images include two or more images of a portion of a face of the person.

For some embodiments of the example method, the capture data includes parameters related to image capture of the plurality of images.

For some embodiments of the example method, the capture data includes parameters related to one or more cameras used for image capture of the plurality of images.

For some embodiments of the example method, the capture data includes at least one camera error parameter related to at least one camera used for image capture at least one image of the plurality of images.

For some embodiments of the example method, performing the one or more mesh photogrametry processes includes generating the capture data corresponding to at least one of the mesh photogrametry processes.

For some embodiments of the example method, the rendering process includes generating avatar data for a scene description environment.

For some embodiments of the example method, obtaining the plurality of images of the portion of the person includes capturing the plurality of images of the portion of the person using one or more cameras.

An example apparatus in accordance with some embodiments may include: a processor; and a memory storing instructions operative, when executed by the processor, to cause the apparatus to perform the method of any one of the methods listed above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1A is a system diagram illustrating an example set of interfaces for a system according to some embodiments.
FIG. 1B is a system diagram illustrating an example set of interfaces for a scene description (stored as an item in gITF.json), three video tracks, an audio track, and a JSON patch update track in an ISOBMFF file according to some embodiments.
FIG. 1C is a system diagram illustrating an example set of interfaces for an MPEG-I node hierarchy supporting elements of scene interactivity according to some embodiments.
FIG. 1D is a schematic plan view illustrating example relationships of extended reality scene description objects according to some embodiments.
FIG. 2 is a process diagram illustrating an example AJIF encode and decode architecture for avatar and capture data according to some embodiments.
FIG. 3 is a process diagram illustrating an example photogrammetry capture pipeline according to some embodiments.
FIG. 4 is a schematic illustration showing an example avatar mesh parameter generation according to some embodiments.
FIG. 5 is a flowchart illustrating an example process for processing avatar data according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

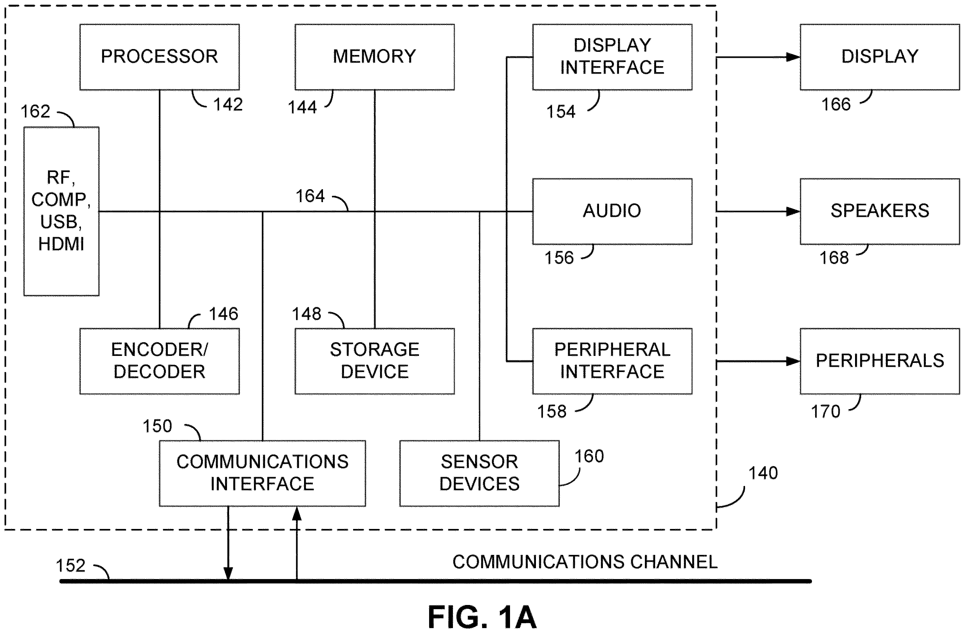

FIG. 1A is a system diagram illustrating an example set of interfaces for a system according to some embodiments. An extended reality display device, together with its control electronics, may be implemented using a system such as the system of FIG. 1A. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1A, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

### Scene Description Framework for XR

In some embodiments, examples disclosed herein may be used in the domain of rendering of extended reality scene description and extended reality rendering. For some embodiments, for example, the present application may be applied in the context of the formatting and the playing of extended reality applications when rendered on end-user devices such as mobile devices or Head-Mounted Displays (HMD). For some example embodiments, glTF material may be rendered in a 3D environment that is rendered through a 2D screen. The examples presented herein in accordance with some embodiments are not limited to XR applications.

In XR applications, a scene description is used to combine explicit and easy-to-parse description of a scene structure and some binary representations of media content.

In time-based media streaming, the scene description itself can be time-evolving to provide the relevant virtual content for each sequence of a media stream. For instance, for advertising purpose, a virtual bottle can be displayed during a video sequence where people are drinking.

This kind of behavior can be achieved by relying on the framework defined in the Scene Description for MPEG media document, Information technology - Coded representation of immersive media- Part 14: Scene Description for MPEG media, ISO/IEC DIS 23090-14 :2021 (E). A scene update mechanism based on the JSON Patch protocol as defined in IETF RFC 6902 may be used to synchronize virtual content to MPEG media streams.

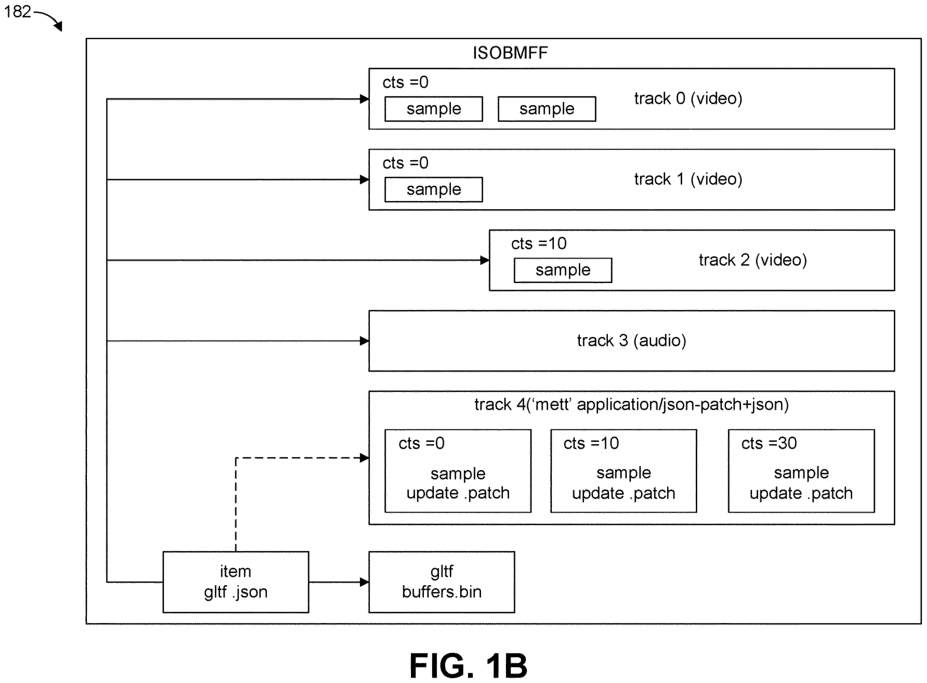

FIG. 1B is a system diagram illustrating an example set of interfaces for a scene description (stored as an item in gITF.json), three video tracks, an audio track, and a JSON patch update track in an ISOBMFF file 182 according to some embodiments.

### Runtime Interactivity

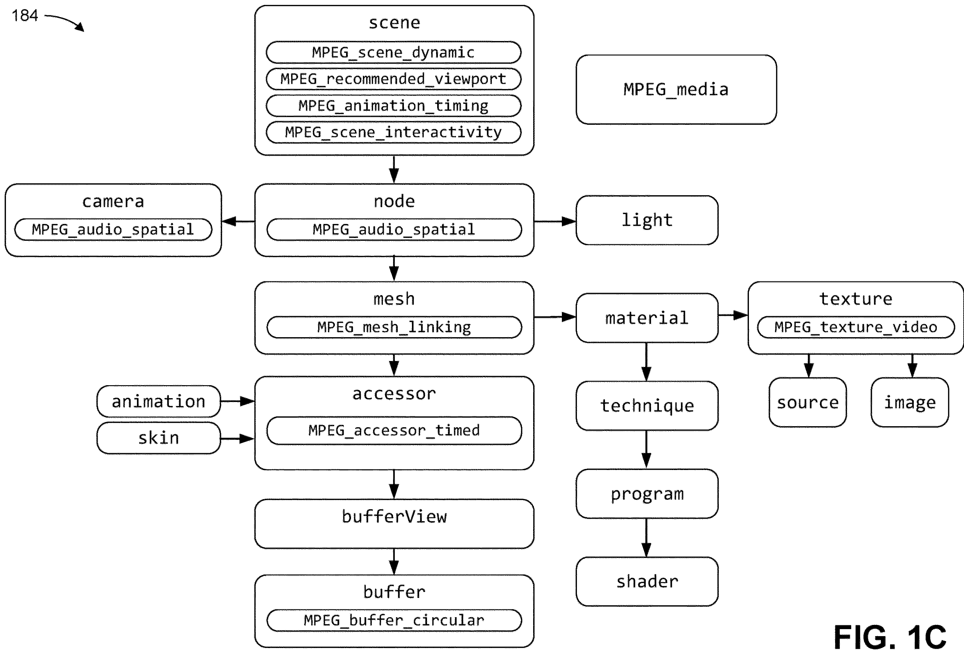

FIG. 1C is a system diagram illustrating an example set of interfaces for an MPEG-I node hierarchy 184 supporting elements of scene interactivity according to some embodiments.

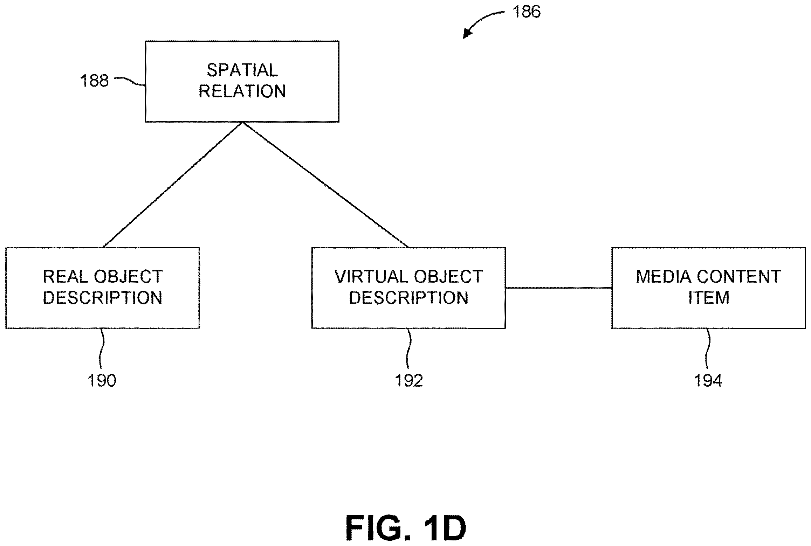

FIG. 1D is a schematic plan view illustrating example relationships of extended reality scene description objects according to some embodiments. In this example, the scene graph 186 includes a description of a real object 190, for example `plane horizontal surface' (that can be a table or the floor or a plate) and a description of a virtual object 192, for example an animation of a walking character. Scene graph node 192 is associated with a media content item 194 that is the encoding of data used to render and display the walking character (for example as a textured animated 3D mesh). Scene graph 186 also includes a node 188 that is a description of the spatial relation between the real object described in node 190 and the virtual object described in node 192. In this example, node 188 describes a spatial relation to make the character walk on the plane surface. When the XR application is started, media content item 194 is loaded, rendered and buffered to be displayed when triggered. When a plane surface is detected in the real environment by sensors (or a camera for some embodiments), the application displays the buffered media content item as described in node 188. The timing is managed by the application according to features detected in the real environment and to the timing of the animation. A node of a scene graph may also include no description and only play a role of a parent for child nodes.

XR applications are various and may apply to different context and real or virtual environments. For example, in an industrial XR application, a virtual 3D content item (e.g. a piece A of an engine) is displayed when a reference object (piece B of an engine) is detected in the real environment by a camera rigged on a head mounted display device. The 3D content item is positioned in the real-world with a position and a scale defined relatively to the detected reference object.

For example, in an XR application for interior design, a 3D model of a furniture is displayed when a given image from the catalog is detected in the input camera view. The 3D content is positioned in the real-world with a position and scale which is defined relatively to the detected reference image. In another application, some audio file might start playing when the user enters an area which is close to a church (being real or virtually rendered in the extended real environment). In another example, an ad jingle file may be played when the user sees a can of a given soda in the real environment. In an outdoor gaming application, various virtual characters may appear, depending on the semantics of the scenery which is observed by the user. For example, birds characters are suitable for trees, so if the sensors of the XR device detect real objects described by a semantic label 'tree', birds can be added flying around the trees. In a companion application implemented by smart glasses, a car noise may be launched in the user's headset when a car is detected within the field of view of the user camera, in order to warn him of the potential danger; Furthermore, the sound may be spatialized in order to make it arrive from the direction where the car was detected.

An XR application may also augment a video content rather than a real environment. The video is displayed on a rendering device and virtual objects described in the node tree are overlaid when timed events are detected in the video. In such a context, the node tree includes only virtual objects descriptions.

Example embodiments are described with reference to the scope of the MPEG-I Scene Description framework using the Khronos glTF extension mechanism, which supports additional scene description features, such as a node tree. However, the principles described herein are not limited to a particular scene description framework.

In an example embodiment, the glTF scene description is extended to support interactivity. The interactivity extension applies at the glTF scene level and is called MPEG_scene_interactivity. See the document ISO/IEC 23090-14, *CDAM 2: Support for Haptics, Augmented Reality, Avatars, Interactivity, MPEG-I Audio, and Lighting,* ISO/IEC JTC 1/SC 29/WG 03 N00797 (*"MPEG Extension*")*.*

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

A User Equipment (UE) may correspond to any extended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application discusses captured rigg parameters encoding for the Avatar JSON Interchange File (AJIF) format for transmission and representation of avatar content for some embodiments. This application introduces a new signaling of capture rigg systems parameters in a human readable file format that encodes an avatar instance.

There are many formats for encoding 3D content including mesh rigs, e.g. deformable 3D objects using weights. Example formats include FBX, USD, or gITF. As understood, none of these formats are dedicated to avatar data. In most cases, an application is tasked with interpreting the data, which may be in one of these example formats and which may relate to an avatar, and with how to parse and utilize the data. As understood, there is no dedicated avatar open format available that includes encoding of capture rig parameters.

A current problem is that there is no way to retrieve or associate raw data to an asset file (Avatar format). To perform corrections or include new information to the asset (e.g., clothes, animation, appearance), either a recapture a new dataset to generate the asset or laborious manual artist work.

This work introduces capture rig parameters encoding into the "Avatar Json Interchange File Format" (AJIF), that stores additional proprieties about an avatar e.g., the parameters used to generate the asset that can be exploited with more recent and advanced technology, such as rendering methods. AJIF was introduced in the '094 application.

### Encoding and Decoding

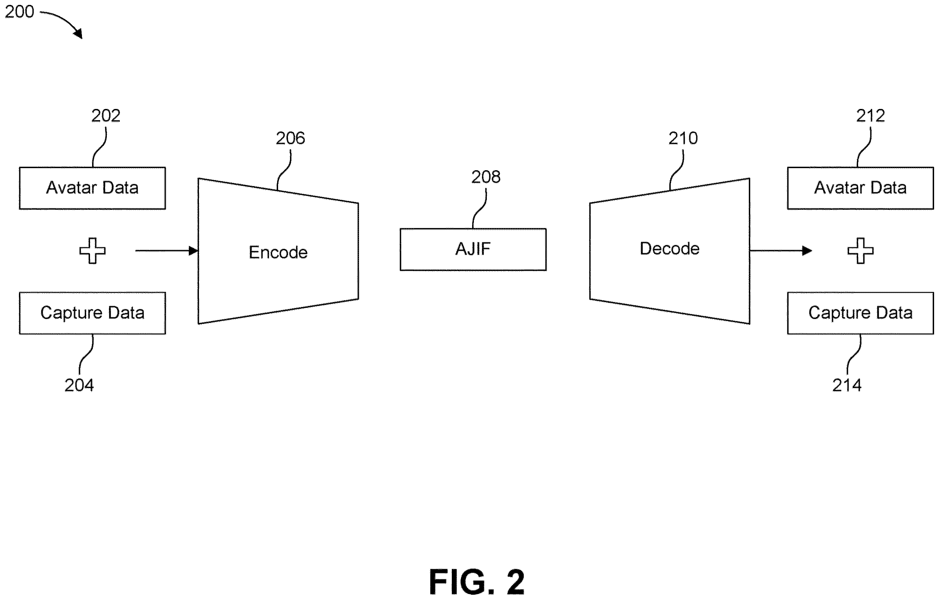

FIG. 2 is a process diagram illustrating an example AJIF encode and decode architecture for avatar and capture data according to some embodiments. The AJIF format 208 stores avatar related data. This data is used as an input when encoding and as an output when decoding. FIG. 2 illustrates an architecture 200 in which the new additional capture parameters data 204, 214 are processed as part of the avatar data 202, 212.

The avatar data 202, 212 is a set of formal information supported by any computer, like a string, an image, or a tensor. For some embodiments, the avatar data respects some specifications. For instance, all integers are expected to be 64-bit signed integers for some embodiments. As a result, if the original data is not exactly in this format, like 32-bit unsigned integers, some processing may be required to build the avatar data. The new addition of capture parameters data 204, 214 follows the same rules as the avatar data 202, 212. In FIG. 2, the two types of information are separated for illustration purposes. In practice the capture parameters data is part of the avatar data. See the '094 application.

For some embodiments, the encoding process 206 may keep all avatar data without loss, may lose part of the avatar data, or may lose some floating precision of the avatar data. The decoding process 210 receives the AJIF data and decodes the AJIF data into avatar data 212 and capture data 214. For some embodiments, the capture data 214 may be part of the avatar data 212.

### Capture Data

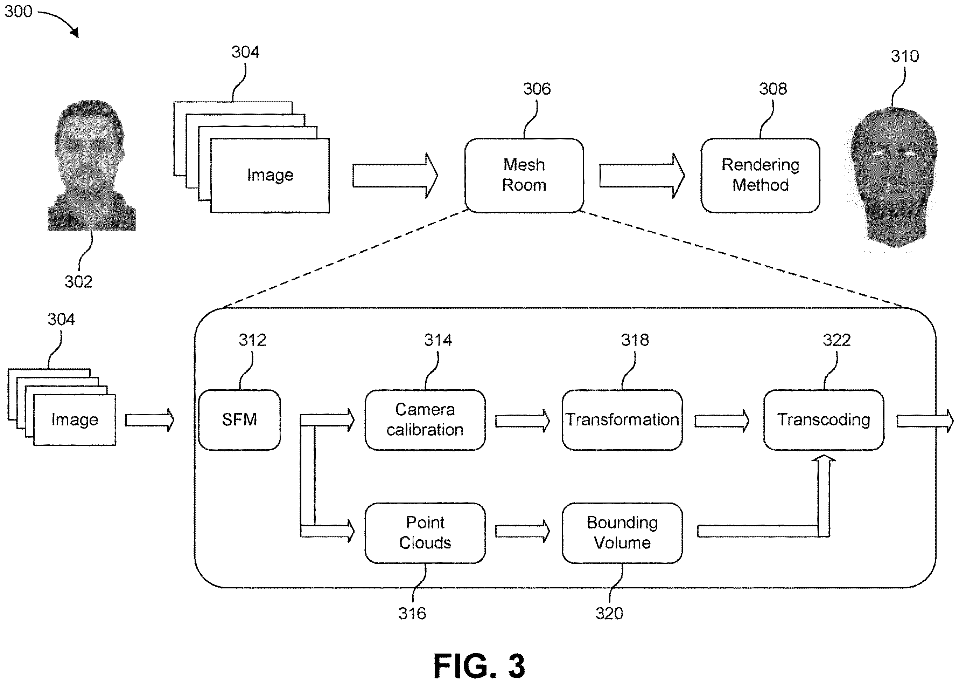

FIG. 3 is a process diagram illustrating an example photogrammetry capture pipeline according to some embodiments. The data used to capture a human or a 3D object may come in many forms and formats. Among the acquisition platforms, the format and representations are usually different and difficult to transition between platforms. FIG. 3 presents an example pipeline 300 used to capture the face of a human 302. The same example pipeline 300 may be used to capture other 3D object representations. The capture process 300 begins with a collection of images 304 that represent camera views of the human face 302. The collection of images 304 is passed through a set of algorithms that produce a mesh, point cloud, and/or rendering in a virtual environment of an initial state (human face). The output may be static or dynamic in time (such as a video recording). For either of these cases, the pipeline 300 in FIG. 3 produces a representation of a human face (avatar). This representation is formatted in a particular format (e.g., AJIF, gltf, USD, json, obj, ply and/or any other computer graphics format extension) to be rendered 308 and viewed by application/engines capable of interpreting such formats.

A problem arises when one would like to recover the raw data, such as the original camera image views, or intermediate raw data, such as camera calibration data, point clouds, transformations, bounding volumes, and/or transcoding data. The final application has no control or knowledge of the pipeline used for capture and the data computed.

For some embodiments, the collection of images 302 is passed through a mesh room (or photogrammetry for some embodiments) process 306. The mesh room (or photogrammetry for some embodiments) process 306 may include a structure from motion (SFM) process, a camera calibration block 314, point clouds 316, a transformation process 318, a bounding volume process 320, and a transcoding process 322.

The structure from motion (SFM) block 312 receives as input a collection of images 304 and computes the rigid scene structure with position and orientation, and calibration per input image. The outputs of this block 312 are camera calibration files and 3D point clouds.

The camera calibration block 314 is a readable format that contains the intrinsic and extrinsic camera parameters. For some embodiments, the camera calibration block 314 is a calibration process that generates a set of camera calibration files given the result of the SFM block 312.

The point clouds block 316 represents a 3D point cloud representation, containing coordinates, normal and RGB color information per point.

The transformation block 318 converts the coordinate system given by the methods into another coordinate system that is compatible with different applications.

The bounding volume block 320 receives the 3D point cloud as an input. The 3D point cloud is used to generate an oriented bounding box surrounding the 3D point cloud, thereby creating a volume of interest of the 3D scene.

The transcoding block 322 receives as input one or more of the outputs of the previous blocks (which means one or more of the outputs of the camera calibration block 314, the point clouds block 316, the transformation block 318, and/or the bounding volume block 320 for some embodiments). In other words, the transcoding block 322 may receive as input, for example, only the output of the camera calibration block 314 (or any other combination of these blocks) for some embodiments. The transcoding block 322 creates a human readable format (JSON) with data (or relevant data for some embodiments) to be read by a third-party application. For some embodiments, the transcoding block 322 encodes the received input data in JSON format. The format may be generic and not application dependent for some embodiments. For some embodiments, the output of the transcoding process 322 is passed to a rendering method 308.

### AJIF Structure

Table 1 shows an example signaling mechanism adapted to AJIF to include the information from the acquisition system and to allow freedom for an application to re-use such data to improve their model. Embodiments are not limited to AJIF. The signaling mechanism shown in Table 1 may be used with, for example, gltf with the "MPEG_node_avatar" in the same manner presented to AJIF, or may be used with USD or any other description format for 3D scenes and avatars.

The AJIF has the following content shown in Table 1 and described in the '094 application. As shown in Table 1, a new "capture" property is added here.

**Table 1.**

| **Name** | **Type** | **Description** | **Required** |
|---|---|---|---|
| capture | CaptureData[1-*] | Information about the capture parameters of the avatar. | No |
| data | RawData[1-*] | List of *RawData.* | No |
| geometries | Geometry[1-*] | List of *Geometry.* | No |
| nodes | Node[1-*] | List of *Node*. | No |
| textures | Texture[1-*] | List of *Texture.* | No |
| skeletons | Skeleton[1-*] | List of *Skeleton.* | No |
| controllers | Controller[1 -*] | List of *Controller.* | No |
| lods | LOD[1-*] | List of *LCD.* | No |
| metadata | Metadata | Metadata about the avatar. | No |
| asset | Asset | Information about the file. | Yes |

All contents in Table 1 except for the two last ones ("metadata" and "asset") are collections of *items.* Each collection is a list of items that may be referenced with their index in the list, in which the first index is zero. For instance, if the "*nodes*" collection contains three items, then the reference of the first one is 0. The reference of the second one is 1, and the reference of the third one is 2.

This application describes the signaling of capture parameters that are used to generate the avatar. These capture parameters are valid for realistic avatar representations and may be simulated for computer graphics avatars. The following section focuses on the new additional properties.

### CaptureData

The "CaptureData" data array mentioned in Table 1 is shown in more detail in Table 2. Table 2 defines the parameters used to generate the avatar asset data.

**Table 2.**

| **Name** | **Type** | **Description** | **Required** |
|---|---|---|---|
| description | string | Capture description. | Yes |
| label | string | Capture label for identification and trackability. | Yes |
| id | Integer | Capture unique identifier | Yes |
| cameras | Camera[1-*] | List of cameras used in the capture. | Yes |
| sfm | integer | References an item in the "data" collection. The referenced item must be a float tensor [number of points, 3]. | No |

The "description" property describes semantically the capture data of the avatar asset.

The "label" property identifies the capture label. This is used to track the correct video or image recording of the avatar asset. For example, the string "CaptureCampaign\23_110_20190625_1100\AU0" identifies an acquisition by a server named "23_110_20190625_1100" and a subject named "AU0".

The "id" property identifies the capture data. This is used to track the correct video or image recording of the avatar asset. For example, 23_110_20190625_1100 is a unique identifier of the acquisition in a collection called "CaptureCampaign" and a subject called "AU0".

The "cameras" property references a list of cameras, of which contain its own parameters.

The "sfm" property references an item in the "data" collection that corresponds to the point cloud generated from the camera(s) calibration process and used as a baseline for triangulation of the final mesh asset.

### Camera

The "Camera" data array mentioned in Table 2 is shown in more detail in Table 3. Table 3 defines the camera parameters used to generate the avatar asset data.

**Table 3.**

| **Name** | **Type** | **Description** | **Required** |
|---|---|---|---|
| description | string | Camera description. | Yes |
| identifier | integer | Camera identifier within the array of cameras. | Yes |
| dimension | float[2] | An array of two values, where the first value is the width and the second is the height of the camera image. | Yes |
| focal | float[2] | An array of two values, where the first value is the "x" focal length and the second is the "y" focal length values of the camera. | Yes |
| center | float[2] | An array of two values, where the first value is the "x" and the second is the "y" center values of the camera. | Yes |
| skew | float | A floating value that determines the skew coefficient of the camera. | Yes |
| distortion | float[3] | An array of three values, where each element is identified as (k1,k2,k3) and are the radial distortion coefficients of the camera lens. | Yes |
| image | integer | References an item in the "data" collection. The referenced item must be an image. | Yes |
| angle | float[2] | An array of two values, where the first value is the "x" and the second is the "y" angle values of the camera. | Yes |
| transform | float[16] | Transformation matrix that represents the global transformation e.g., extrinsic parameters. | Yes |
| confidence | CameraError | Camera calibration error that represent the confidence of the parameter. | |

The "description" property describes semantically the camera.

The "identifier" property identifies a unique integer for the camera as given in the original capture setup. In some embodiments the "identifier" may be a string to allow a more flexible identification method e.g., "cam_0".

The "dimension" property contains a float array of size 2, which identifies the width and height of the "image" respectively.

The "focal" property contains a float array of size 2, which identifies the "x" and "y" focal length to the camera in pixels.

The "center" property contains a float array of size 2, which identifies the "x" and "y" optical center of the camera in pixels.

The "skew" property contains a floating value which identifies the skew coefficient of the camera in pixels.

The "distortion" property contains a float array of size 3, which identifies the "k1", "k2" and "k3" distortion coefficients the camera in pixels.

The "image" property references an image in the "data" collection that corresponds to the camera view. The dimension of the tensor must be consistent with the dimension of the image.

The "transform" property refers to the extrinsic camera parameters. This is formed of a four-by-four matrix (float array of 16 values), that contains the transformation matrix of a camera in world space.

The "cameraError" property refers to the variance in error of the camera parameters estimated.

### CameraError

The "CameraError" data array mentioned in Table 3 is shown in more detail in Table 4. Table 4 defines the camera error parameters for each camera used to generate the avatar asset data.

**Table 4.**

| **Name** | **Type** | **Description** | **Required** |
|---|---|---|---|
| focal | float[tuple, tuple] | An array of two tuples, where the first value is the error variance of "x" focal length and the second value is the error variance of the "y" focal length values of the camera. | Yes |
| center | float[tuple, tuple] | An array of two tuples, where the first value is the error variance of "x" and the second is the error variance of "y" center values of the camera. | Yes |
| skew | tuple | A tuple that determines the error variance of skew coefficient of the camera. | Yes |
| distortion | float[tuple, tuple, tuple] | An array of three tuples, where each element is the error variance of the radial distortion coefficients of the camera lens. | Yes |
| angle | float[tuple, tuple] | An array of two tuples, where the first value is the error variance of "x" and the second is the error variance of "y" angle values of the camera. | Yes |
| transform | float[16*tuple] | Transformation matrix that represents the error variance of the global transformation e.g., extrinsic parameters error. | Yes |

Each tuple in the "cameraError" property contains the (min, max) variance values of the projected error for every camera parameter in "camera" property. This arrangement permits identification of the confidence values for each camera parameter in the capture rig.

### AJIF Schemas Example and Parsing

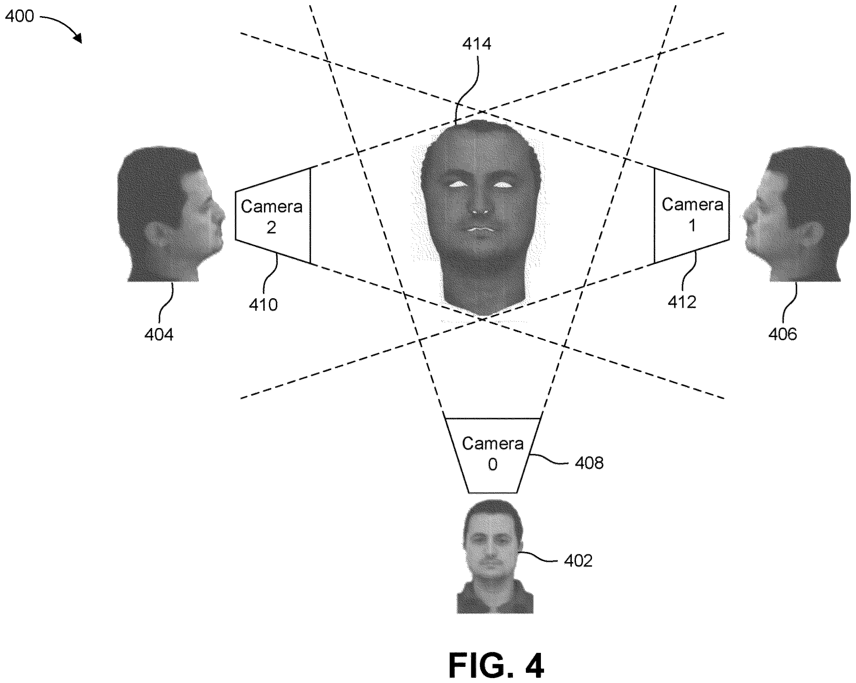

FIG. 4 is a schematic illustration showing an example avatar mesh parameter generation according to some embodiments. This example process 400 considers an avatar 414 that was generated from the parameters in the "capture" property. FIG. 4 shows an avatar 414 that was generated using face images 402, 404, 406 that are captured from camera 0 (408), camera 1 (412), and camera 2 (410), respectively. For some embodiments, camera 0 (408), camera 1 (412), and camera 2 (410) are centered around a person to capture a center view image 402, a left view image 406, and a right view image 404 of the person.

Code Listing 1 shows an example code listing that may be used with an avatar parameter generation process or an avatar code parser process.

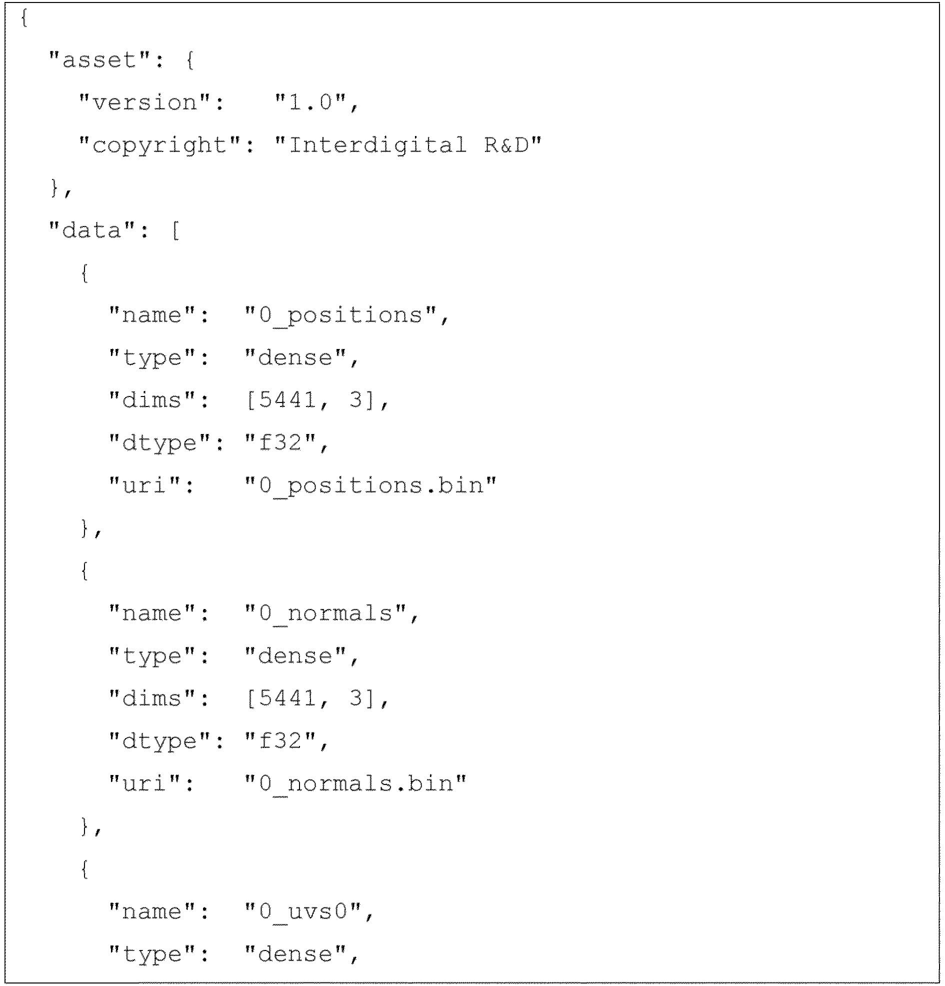

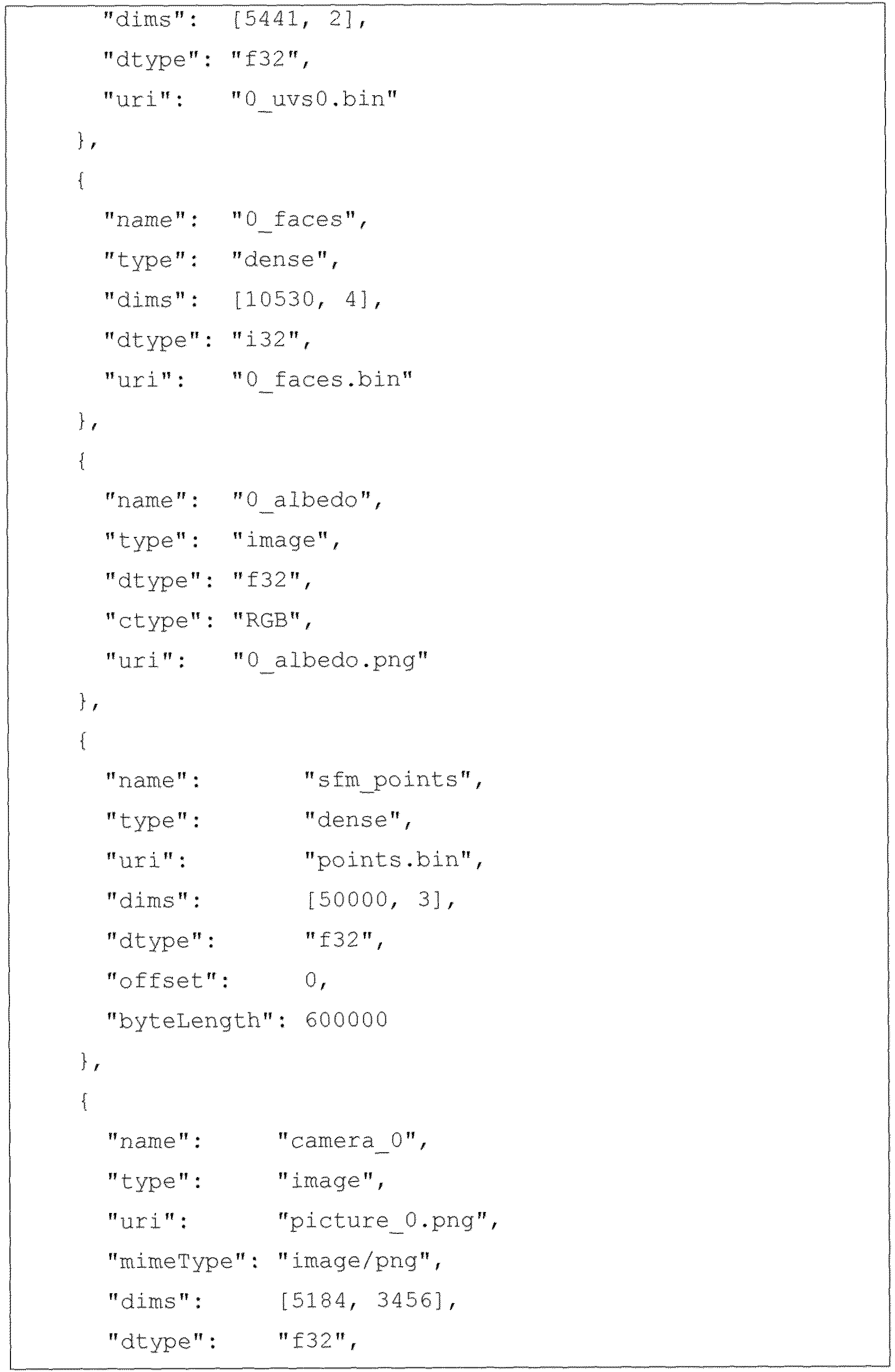

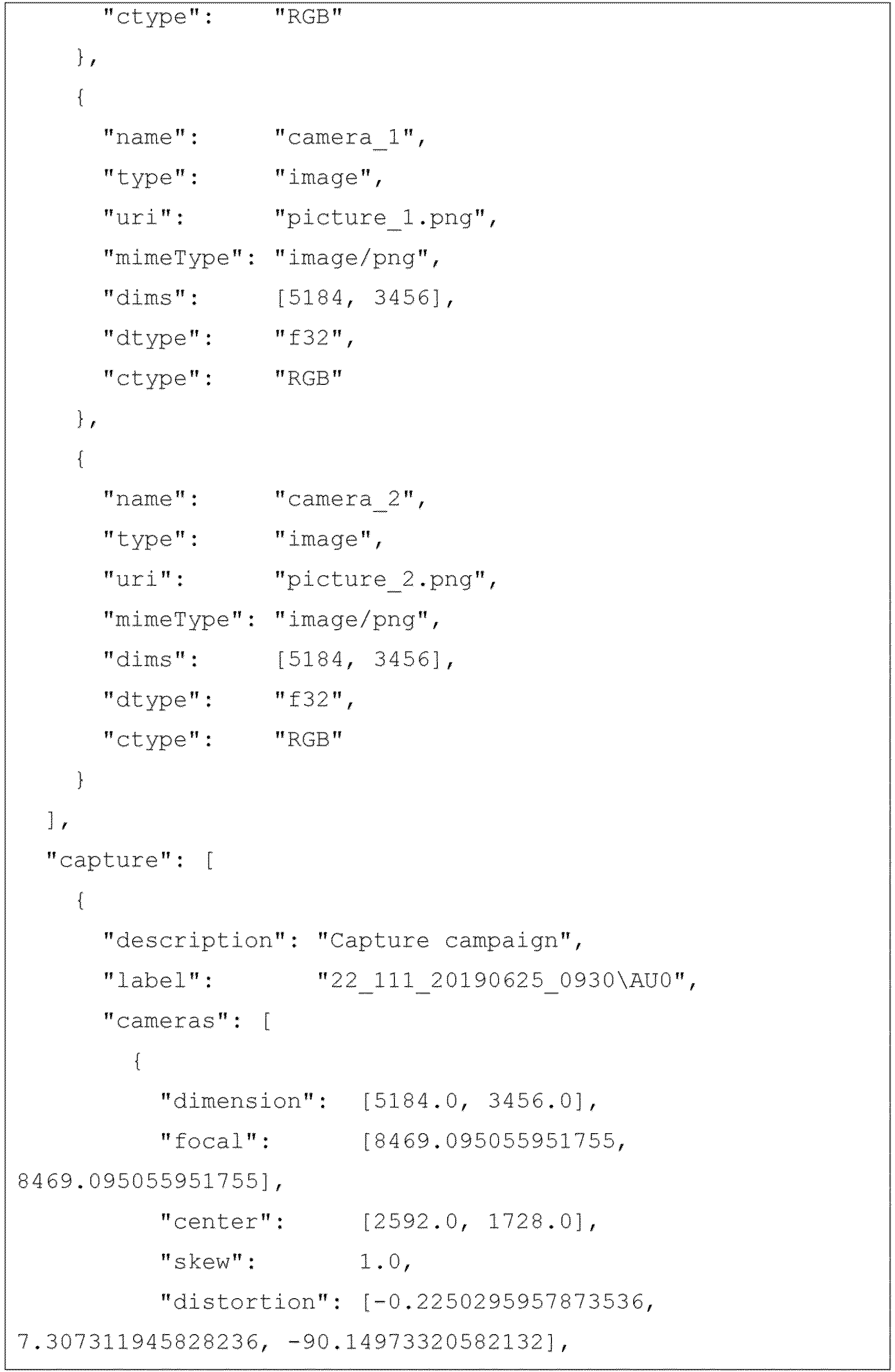

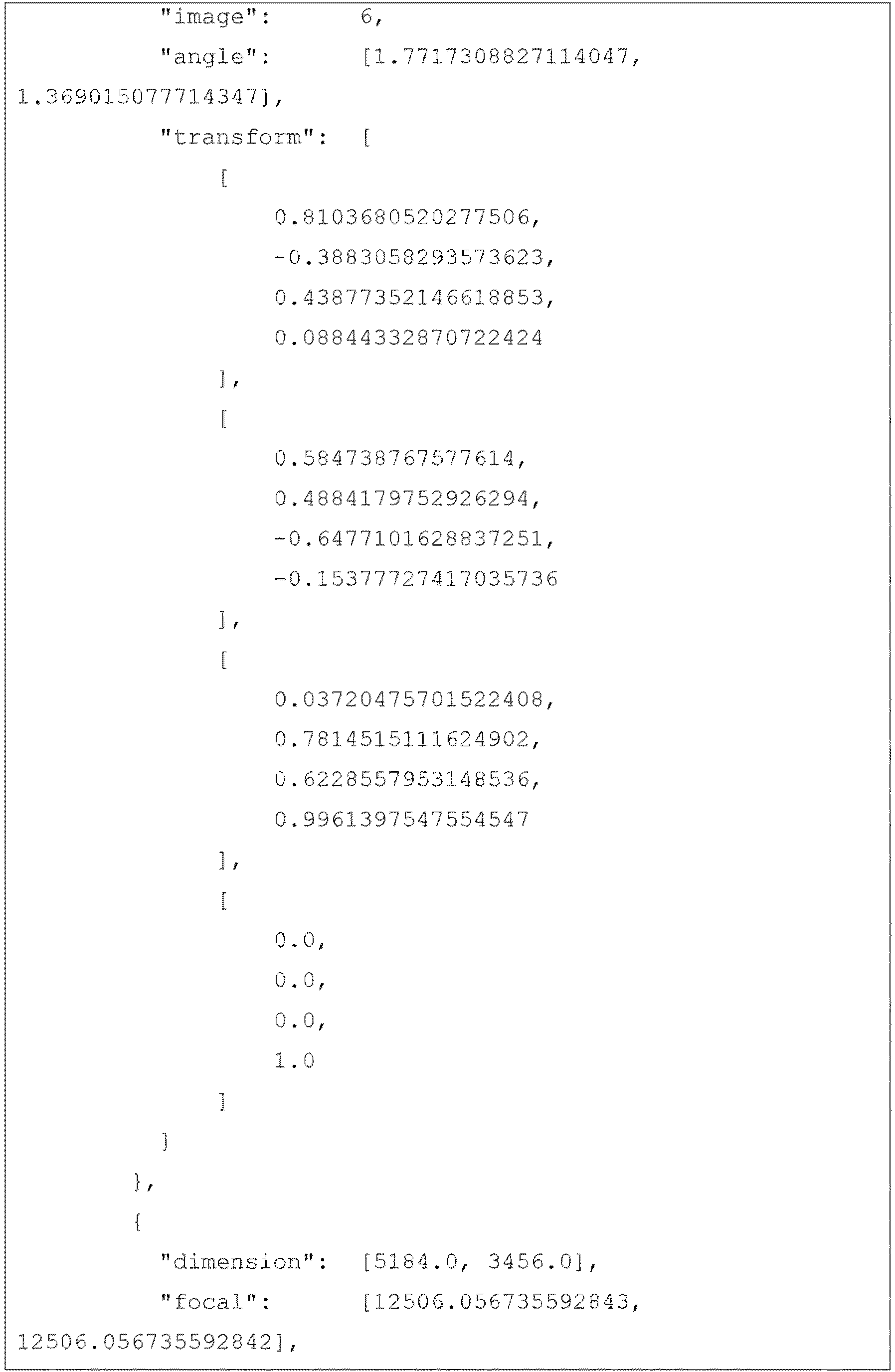

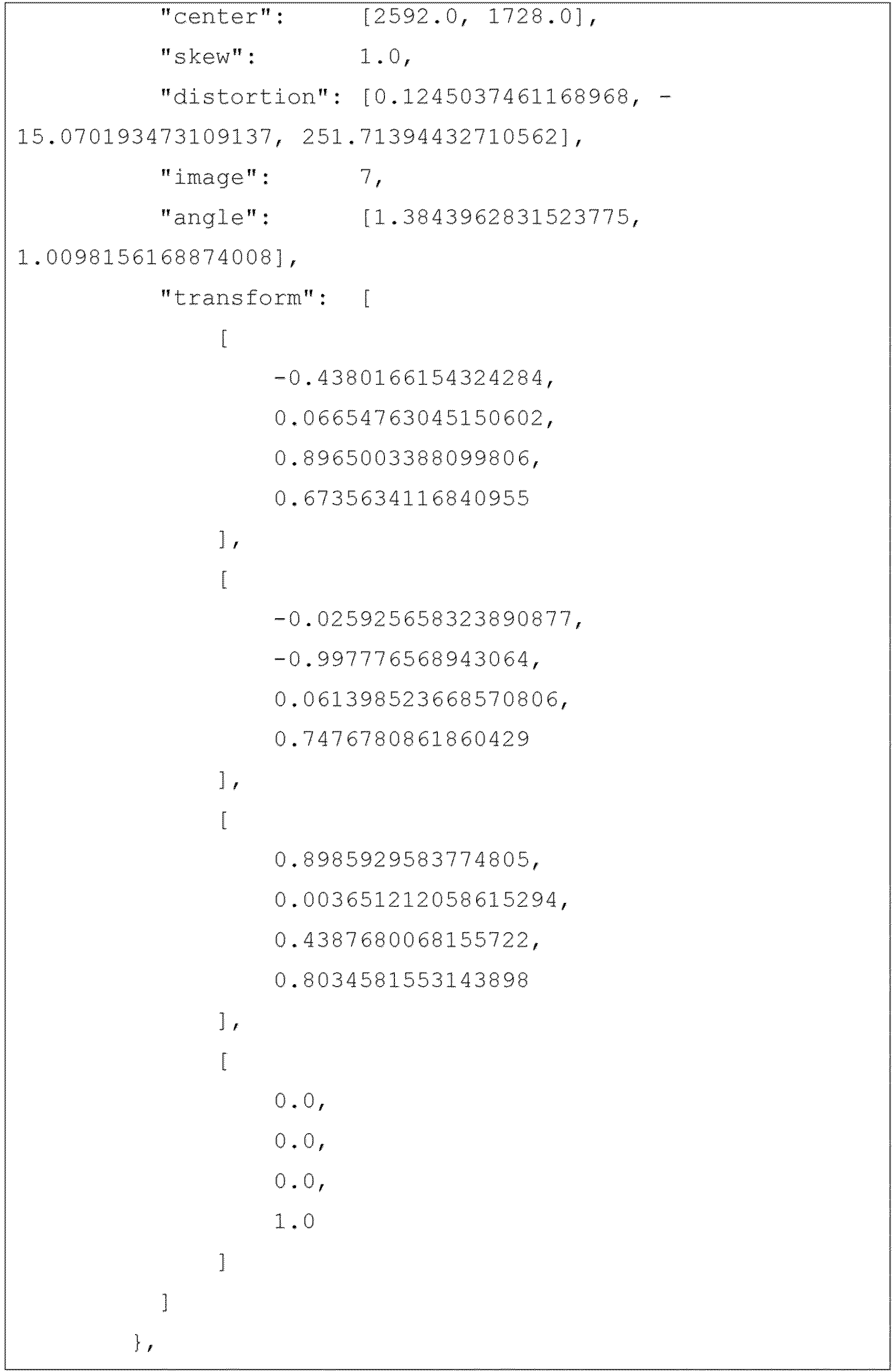

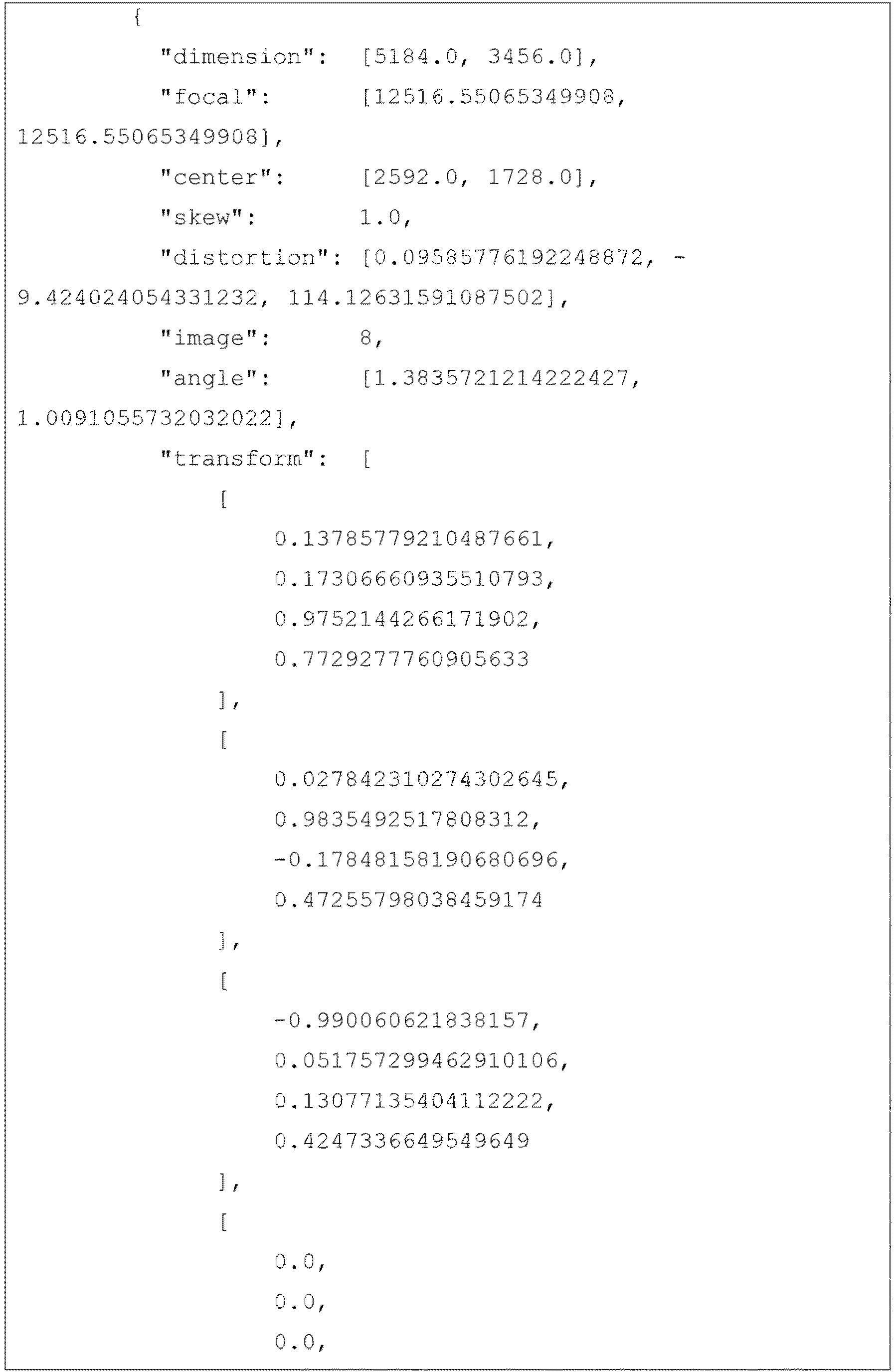

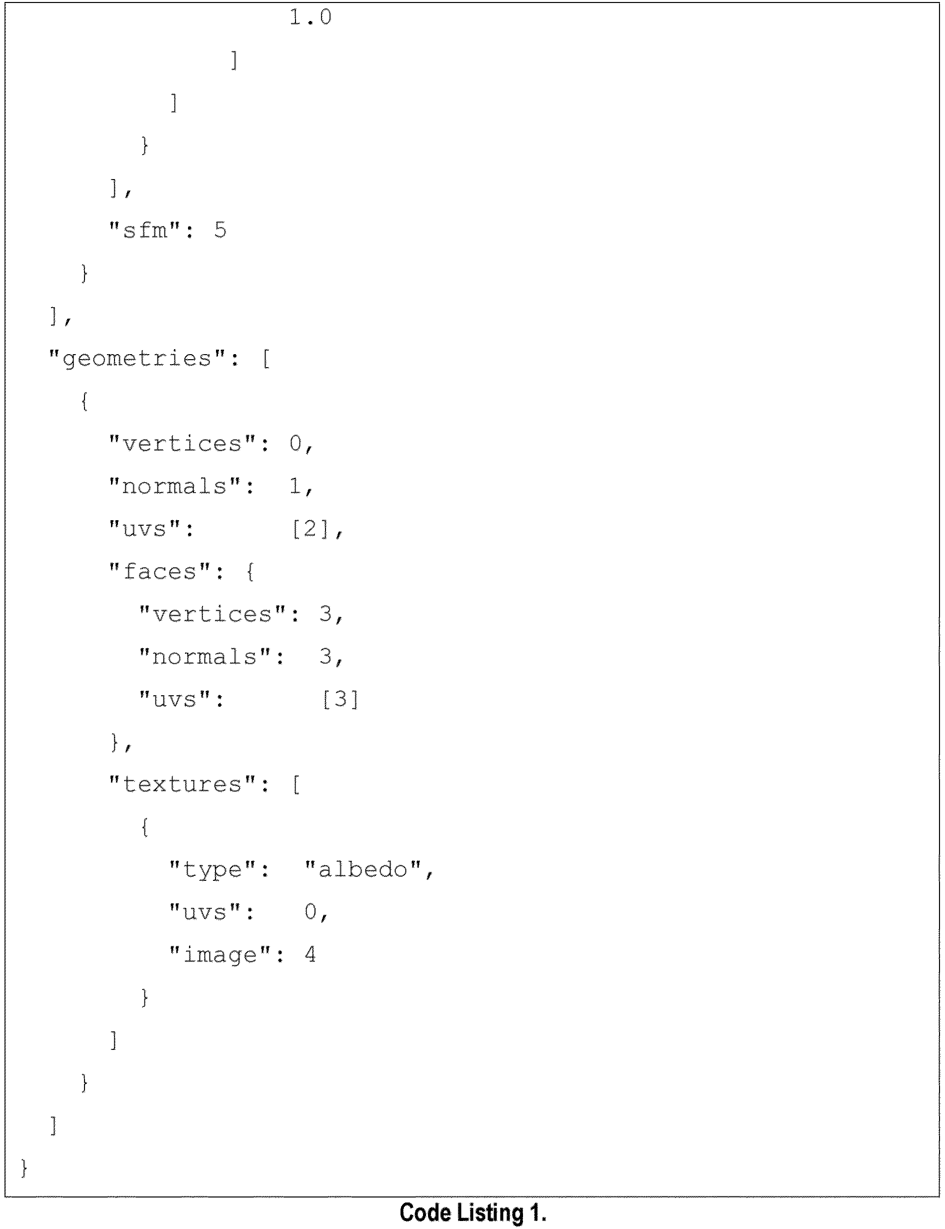

An example code parser may parse the code shown in Code Listing 1. The example in Code Listing 1 shows four root data structure sections: "asset", "data", "capture", and "geometries". The code parser may first decode the "asset" root property and ensure that the code parser is able to handle the particular version of the file. Since the "version" property indicates a version of "1.0", the parsing may continue. The remaining three root data structure sections ("data", "capture", and "geometries") correspond to three rows of Table 1.

Consider the "data" data structure section. Since the "sfm" data structure (which has a "name" property of "sfm_points" in the example shown in Code Listing 1) references data in a "data" root list, the code parser first gathers the related binary data. In this case, the binary data is read from the file "points.bin". A 32-bit float tensor with dimensions ("dims") of [50000, 3] is built using the binary data given the "type", "dims", and "dtype" properties of the data structure. This tensor defines the point cloud estimated from the initial capture prior to the asset generation.

The "camera" data structures (which have "name" properties of "camera_0", "camera_1 ", and "camera_2") also reference data in the "data" root list through the "image" propriety. Each camera is associated with an image. The images are built from the data item for indices 6, 7, and 8 (which is found in the "image" property). The parser loads the image files "picture_0.png", "picture_1.png", and "picture_2.png" and converts each of them to a 32-bit float RGB image, given the "dtype" (which is equal to "f32" for each camera data structure) and "ctype" (which is equal to "RGB" for each camera data structure) properties of the data item.

The code parser may decode a "capture" data array structure if present in the file. For sone embodiments, the code parser may find several properties, such as, "description", "label", "cameras", and "sfm", which are shown in Table 2. Table 2 offers more detail of the data array CaptureData[]. Code Listing 1 shows example "capture" data structure entries for the properties "description", "label", "cameras", and "sfm". The example data structure for the "cameras" property in Code Listing 1 shows entries for many of the items listed in Table 3.

The code parser may decode the first geometry of the "geometries" root list. The code parser may find several properties that reference data in the "data" root list. In each case, the code parser decodes the item found in the "data" root list and associates the decoded data to the referenced property. For example, the "vertices" property of the geometry data structure refers to the first item of the "data" root list. The code parser gathers the related binary data, which is in the file "0_positions.bin" in this case. The code parser builds a 32-bit float tensor with dimensions of [5441, 3] using the binary data given the "type", "dims", and "dtype" properties of the data structure. This tensor is used to define the vertices of the geometry of the avatar. The vertices ("vertices" property), normals ("normals" property), uvs ("uvs" list), and their corresponding face indices (found in the "faces" property) are decoded and added to the geometry of the avatar.

The parser decodes a texture from the first item of the "textures" list of the geometry. The texture type is "albedo" (found in the "type" property). The "textures" data structure uses the first uvs definition (UV coordinates + face indices) of the geometry because the "uvs" property of the "textures" data structure is 0 (which indicates an index of 0). The texture image is built from the image data item for index 4 (found in the "image" property). The parser loads the image file "0_albedo.png" and converts the image to a 32-bit float RGB image, given the "dtype" and "ctype" properties of the data structure with a "name" property of "0_albedo".

The code parser decodes the content of the geometry item and gathers the corresponding data in an internal structure, such as scene objects found in game engines. Since the first node references a geometry and has no children, the resulting avatar mesh is made of only a single geometry.

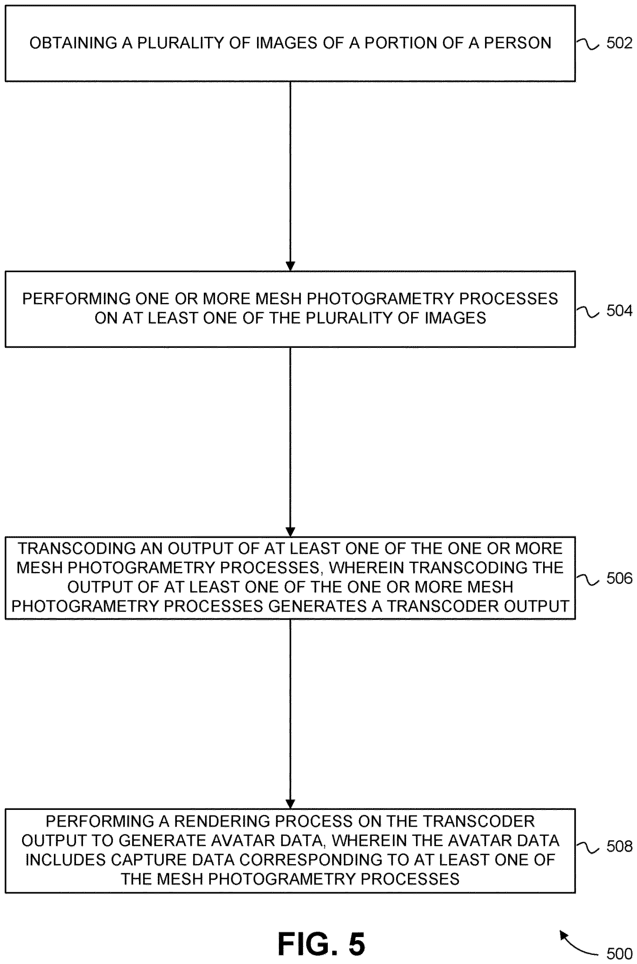

FIG. 5 is a flowchart illustrating an example process for processing avatar data according to some embodiments. For some embodiments, an example process 500 may include obtaining 502 a plurality of images of a portion of a person. For some embodiments, the example process 500 may further include performing 504 one or more mesh photogrametry processes on at least one of the plurality of images. For some embodiments, the example process 500 may further include transcoding 506 an output of at least one of the one or more mesh photogrametry processes, wherein transcoding the output of at least one of the one or more mesh photogrametry processes generates a transcoder output. For some embodiments, the example process 500 may further include performing 508 a rendering process on the transcoder output to generate avatar data, wherein the avatar data includes capture data corresponding to at least one of the mesh photogrametry processes. For some embodiments, performing one or more mesh photogrametry processes on at least one of the plurality of images may include performing one or more geometrical processes on at least one of the plurality of images. For some embodiments, performing one or more mesh photogrametry processes on at least one of the plurality of images may include performing one or more capture, acquisition, and/ or reconstruction processes on at least one of the plurality of images.

An example method in accordance with some embodiments may include: obtaining Avatar JSON Interchange File (AJIF) format data corresponding to an avatar of a person; decoding the AJIF format data to generate avatar data, wherein the avatar data includes capture data corresponding to at least one mesh photogrametry process; and performing a rendering process on the decoded avatar data using one or more parameters associated with the capture data.

An example apparatus in accordance with some embodiments may include: a processor; and a memory storing instructions operative, when executed by the processor, to cause the apparatus to perform the example method listed above.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining a plurality of images of a portion of a person; performing one or more mesh photogrametry processes on at least one of the plurality of images; transcoding an output of at least one of the one or more mesh photogrametry processes, wherein transcoding the output of at least one of the one or more mesh photogrametry processes generates a transcoder output; and performing a rendering process on the transcoder output to generate avatar data, wherein the avatar data includes capture data corresponding to at least one of the mesh photogrametry processes.

For some embodiments of the example method, the one or more mesh processes includes at least one of the following processes: a structure from motion (SFM) process, a camera calibration process, a point cloud data generation process, a bounding volume process, and a coordinate transformation process.

Some embodiments of the example method may further include encoding the avatar data to generate Avatar JSON Interchange File (AJIF) format output data.

Some embodiments of the example method may further include encoding the avatar data to generate Graphics Library Transmission Format (gITF) output data.

For some embodiments of the example method, encoding the avatar data includes: compressing the avatar data to generate compressed avatar data; and encoding the compressed avatar data.

Some embodiments of the example method may further include sending the encoded avatar data to a server.

For some embodiments of the example method, the plurality of images include two or more images of the portion of the person.

For some embodiments of the example method, the plurality of images include two or more images of a portion of a face of the person.

For some embodiments of the example method, the capture data includes parameters related to image capture of the plurality of images.

For some embodiments of the example method, the capture data includes parameters related to one or more cameras used for image capture of the plurality of images.

For some embodiments of the example method, the capture data includes at least one camera error parameter related to at least one camera used for image capture at least one image of the plurality of images.

For some embodiments of the example method, performing the one or more mesh photogrametry processes includes generating the capture data corresponding to at least one of the mesh photogrametry processes.

For some embodiments of the example method, the rendering process includes generating avatar data for a scene description environment.

For some embodiments of the example method, obtaining the plurality of images of the portion of the person includes capturing the plurality of images of the portion of the person using one or more cameras.

An example apparatus in accordance with some embodiments may include: a processor; and a memory storing instructions operative, when executed by the processor, to cause the apparatus to perform the method of any one of the methods listed above.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining a plurality of images of a portion of a person;
performing one or more mesh photogrametry processes on at least one of the plurality of images;
transcoding an output of at least one of the one or more mesh photogrametry processes,
wherein transcoding the output of at least one of the one or more mesh photogrametry processes generates a transcoder output; and
performing a rendering process on the transcoder output to generate avatar data,
wherein the avatar data comprises capture data corresponding to at least one of the mesh photogrametry processes.

2. The method of claim 1, wherein the one or more mesh processes comprises at least one of the following processes: a structure from motion (SFM) process, a camera calibration process, a point cloud data generation process, a bounding volume process, and a coordinate transformation process.

3. The method of any one of claims 1-2, further comprising encoding the avatar data to generate Avatar JSON Interchange File (AJIF) format output data.

4. The method of any one of claims 1-2, further comprising encoding the avatar data to generate Graphics Library Transmission Format (gITF) output data.

5. The method of any one of claims 3-4, wherein encoding the avatar data comprises:
compressing the avatar data to generate compressed avatar data; and
encoding the compressed avatar data.

6. The method of any one of claims 3-5, further comprising sending the encoded avatar data to a server.

7. The method of any one of claims 1-6, wherein the plurality of images comprises two or more images of the portion of the person.

8. The method of any one of claims 1-6, wherein the plurality of images comprises two or more images of a portion of a face of the person.

9. The method of any one of claims 1-8, wherein the capture data comprises parameters related to image capture of the plurality of images.

10. The method of any one of claims 1-9, wherein the capture data comprises parameters related to one or more cameras used for image capture of the plurality of images.

11. The method of any one of claims 1-10, wherein the capture data comprises at least one camera error parameter related to at least one camera used for image capture at least one image of the plurality of images.

12. The method of any one of claims 1-11, wherein performing the one or more mesh photogrametry processes comprises generating the capture data corresponding to at least one of the mesh photogrametry processes.

13. The method of any one of claims 1-12, wherein the rendering process comprises generating avatar data for a scene description environment.

14. The method of any one of claims 1-13, wherein obtaining the plurality of images of the portion of the person comprises capturing the plurality of images of the portion of the person using one or more cameras.

15. An apparatus comprising:
a processor; and
a memory storing instructions operative, when executed by the processor, to cause the apparatus to perform the method of any one of claims 1 through 14.
